# EUROPÄISCHE PATENTSCHRIFT

(11) **EP 2 161 464 B1**
(45) Veröffentlichungstag und Bekanntmachung des Hinweises auf die Patenterteilung: **16.09.2015**
(21) Anmeldenummer: 09166796.4
(22) Anmeldetag: 30.07.2009
(51) Int. Cl.: F16C 32/04, F01D 3/04, F02C 7/06, F01D 25/12

(54) **Dampfturbine mit Magnetlagerkühlung**
Steam turbine with magnetic bearing cooling
Turbine à vapeur dotée d'un refroidissement de palier magnétique

(30) Priorität: 03.09.2008 DE 102008045654
(43) Veröffentlichungstag der Anmeldung: 10.03.2010
(73) Patentinhaber: Siemens Aktiengesellschaft, 80333 München (DE)
(72) Erfinder: Hampel, Jens, 02625 Bautzen (DE)

(56) Entgegenhaltungen:
- EP-A1- 0 462 724
- DE-A1- 2 744 918
- DE-A1- 4 444 587
- JP-A- H11 125 249
- US-A- 5 285 123

## Beschreibung

Die Erfindung betrifft eine Dampfturbine mit einem Dampfturbinenrotor, der mit einem Magnetlager gelagert ist, wobei die Dampfturbine mit einer Magnetlagerkühlung zur Kühlung des Magnetlagers ausgestattet ist.

Eine Dampfturbine findet beispielsweise in einer industriellen Anwendung als Antrieb eines Prozessgasverdichters in einer verfahrenstechnischen Anlage oder als Antrieb eines Generators in einem Kraftwerk Anwendung. Der Dampfturbine wird Frischdampf beispielsweise mit einem Druck von 100 bar bei 500°C zugeführt und in der Dampfturbine entspannt. Die Dampfturbine weist einen Dampfturbinenrotor auf, der längsseitig jeweils ein Wellenende aufweist, an dem der Dampfturbinenrotor jeweils gelagert ist. Für die Lagerung des Rotors ist beispielsweise ein Magnetlager vorgesehen, das an einem der Wellenenden vorgesehen ist. Ist die Dampfturbine einflutig ausgebildet, so ist der Frischdampfeintritt beispielsweise benachbart zu diesem Wellenende angeordnet. Der durch den Dampfeintritt auf den Dampfturbinenrotor treffende Frischdampf erwärmt den Dampfturbinenrotor entsprechend stark, so dass via das Wellenende das an diesem Wellenende angebrachte Magnetlager einer hohen Wärmebelastung ausgesetzt ist. Insbesondere besteht die Gefahr, dass das Magnetlager vom Typ "heteropolar" an der Isolation des Rotorblechpakets überhitzt wird.

Es ist bekannt, das Magnetlager dadurch zu kühlen, dass Kühlluft durch den Magnetspalt des Magnetlagers geblasen wird. Diese Art von Kühlung ist herkömmlich jedoch lediglich zur Abfuhr eines Wärmestroms hervorgerufen durch Eigenwärmeentwicklung geeignet, so dass das Magnetlager von der Überhitzung durch den Frischdampf nicht geschützt werden kann. Dadurch ist das Magnetlager einer hohen thermischen Belastung ausgesetzt und kann nicht sicher betrieben werden.

Im Dokument DE 44 44 587 A1, welches die technischen Merkmale vom Oberbegriff des unabhängigen Anspruchs 1 offenbart, und im Dokument DE 27 44 918 A1 sind Wellen mit Kühlvorrichtungen offenbart. EP 0 462 724 A1, US 5 285 123 A und JP H11 125249 offenbaren Wellen mit Magnetlagern.

Aufgabe der Erfindung ist es, eine Dampfturbine mit einem mit einem Magnetlager gelagerten Dampfturbinenrotor zu schaffen, wobei das Magnetlager sicher betreibbar ist.

Die Aufgabe wird mit den Merkmalen des Patentanspruchs 1 gelöst. Bevorzugte Ausgestaltungen dazu sind in den weiteren Patentansprüchen angegeben.

Die erfindungsgemäße Dampfturbine weist einen Frischdampfeintritt und einen Dampfturbinenrotor auf, der an seinem frischdampfeintrittsseitigen Wellenende mit einem Magnetlager gelagert ist, wobei zwischen dem Frischdampfeintritt und dem Magnetlager das Wellenende mit einer umlaufenden Kühlrippe versehen ist, die von einem Kühlmedium umströmbar ist, so dass ein Wärmestrom, der von dem Frischdampf, wenn dieser am Frischdampfeintritt in die Dampfturbine eintritt, in den Dampfturbinenrotor eingebracht ist, von der Kühlrippe an das Kühlmedium abführbar ist.

Somit ist das Magnetlager von der starken Erwärmung des Dampfturbinenrotors durch den Frischdampf geschützt, so dass eine hohe Temperaturbeanspruchung des Magnetlagers unterbunden ist. Dadurch kann das Magnetlager in der Dampfturbine sicher betrieben werden.

Darüber hinaus ist die Kühlrippe zur Umgebung der Dampfturbine hin freigelegt und somit ist das Kühlmedium Luft. Beim Betrieb der Dampfturbine dreht sich der Dampfturbinenrotor, so dass die Kühlrippe sich ebenfalls dreht. In der Regel ist die Umgebungsluft der Dampfturbine in Ruhe, so dass die Kühlrippe in der Umgebungsluft relativbewegt wird. Somit wird durch Konvektion der Wärmestrom durch die Kühlrippe an die Umgebungsluft abgegeben, wodurch der Wärmeübergang an der Kühlrippe hoch ist. Außerdem stellt die Umgebungsluft ein quasi unendliches Kühlluftreservoir dar, so dass die Umgebungsluft nicht gekühlt zu werden braucht.

Zusätzlich wird eine nicht zur Erfindung gehörende Dampfturbine beschrieben, mit einer zwangbelüfteten Kammer, die die Kühlrippe umgibt. Die Kammer weist bevorzugt eine Einrichtung zur Besprühung der Kühlrippe mit einem flüssigen Kühlmedium auf. Das flüssige Kühlmedium hat in der Regel eine höhere Wärmekapazität als Luft, so dass mit dem flüssigen Kühlmedium der Wärmestrom schneller von der Kühlrippe abführbar ist. Wird beim Betrieb der Dampfturbine das flüssige Kühlmedium auf die Kühlrippe gesprüht, so ist die Kühlrippe von dem flüssigen Kühlmedium benetzt. Hervorgerufen durch Fliehkraft wird das flüssige Kühlmedium auf der Kühlrippe nach außen gedrängt und überstreicht dabei die Oberfläche der Kühlrippe. Dadurch kann das flüssige Kühlmedium von der Kühlrippe effektiv Wärme aufnehmen. Schließlich spritzt das flüssige Kühlmedium in die Kammer und kann von dort abgeführt werden.

Bevorzugt ist das flüssige Kühlmedium destilliertes Wasser. Das destillierte Wasser weist eine geeignet hohe Wärmekapazität auf und ist somit als das flüssige Kühlmedium geeignet. Ferner hat das destillierte Wasser keine mineralischen Verunreinigungen, so dass durch eventuelles Verdampfen des destillierten Wassers auf der Kühlrippe es zu keinen Ablagerungen kommen kann.

Ferner ist es bevorzugt, dass ein Kreislaufsystem mit einem Kühler für das flüssige Kühlmedium zum Besprühen der Kühlrippe vorgesehen ist. In dem Kreislaufsystem wird das flüssige Kühlmedium von der Kammer abgeführt und nach dem Kühlen von dem Kühler der Kammer wieder zugeführt. Dadurch ist der Verbrauch des flüssigen Kühlmediums gering. Außerdem ist mittels des Kühlers eine definierte niedrige Temperatur des flüssigen Kühlmediums vor dem Besprühen der Kühlrippe eingestellt, mit der die Kühlung der Kühlrippe effektiv und vorhersagbar bewerkstelligt werden kann.

Die von dem Kühlmedium umströmten Bereiche der Oberfläche der Kühlrippe sind bevorzugt mit einer die Oberflächen vergrößernd wirkenden Gestalt versehen. Hierbei sind die von dem Kühlmedium umströmten Bereiche der Oberfläche der Kühlrippe bevorzugt wellig ausgestaltet. Dadurch ist die Oberfläche der Kühlrippe, mit der die Kühlrippe mit dem Kühlmedium in Kontakt steht, vergrößert ausgeführt, so dass der Wärmeübergang von der Kühlrippe an das Kühlmedium erhöht ist.

Außerdem ist es bevorzugt, dass die Kühlrippe als eine Scheibe ausgebildet ist. Die Scheibe ist bevorzugt einstückig mit dem Wellenende ausgebildet. Dabei kann die Scheibe beispielsweise mit dem Wellenende durch Drehen gefertigt sein. Dadurch braucht eine Befestigung der Scheibe an dem Wellenende nicht vorgesehen zu werden, wodurch die Scheibe an dem Wellenende weniger empfindlich gegen Temperaturspannungen ist. Alternativ ist es bevorzugt, dass die Scheibe mit einem Schrumpfsitz an das Wellenende angebaut ist. Dadurch braucht die Scheibe nicht aus dem Vollen an dem Wellenende gedreht zu werden, wodurch das Wellenende materialsparend hergestellt werden kann. Außerdem kann die Scheibe vorteilhaft aus einem Wärme gut ableitenden Material hergestellt sein.

Die Dampfturbine weist bevorzugt einen Ausgleichskolben auf, mit dem der Frischdampfeintritt von dem Magnetlager räumlich abgetrennt ist, wobei zwischen dem Ausgleichskolben und dem Magnetlager die Kühlrippe angeordnet ist. Ferner weist bevorzugt das Wellenende eine erste Wellenstufe und eine dritte Wellenstufe auf, die einen größeren Durchmesser hat als die erste Wellenstufe, wobei auf der ersten Wellenstufe das Magnetlager und auf der dritten Wellenstufe die Kühlrippe vorgesehen sind. Das Magnetlager ist bevorzugt von heteropolarem Typ.

Im Folgenden wird eine bevorzugte Ausführungsform einer erfindungsgemäßen Dampfturbine anhand der beigefügten schematischen Zeichnungen erläutert. Es zeigt:

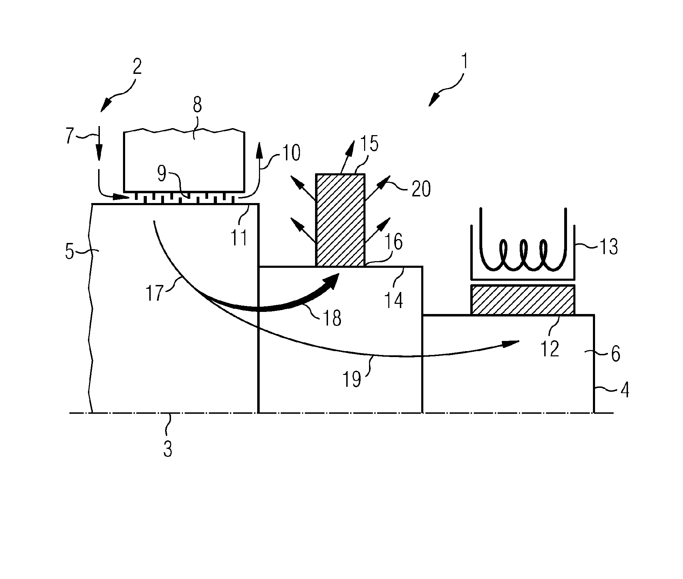

Fig. 1 einen frischdampfseitigen Längsquerschnitt der Ausführungsform der Dampfturbine.

Wie es aus Fig. 1 ersichtlich ist, weist eine erfindungsgemäße Dampfturbine einen Dampfturbinenrotor 1 auf. Die Dampfturbine ist einflutig ausgebildet, so dass im Bereich eines Längsendes des Dampfturbinenrotors 1 ein Frischdampfeintritt 2 vorgesehen ist, wodurch an diesem Längsende eine Frischdampfseite 5 der Dampfturbine ausgebildet ist. Der Dampfturbinenrotor 1 weist an der Frischdampfseite 5 ein Wellenende 4 auf, an dessen freiem Längsseite eine Lagerseite 6 ausgebildet ist. Der Dampfturbinenrotor ist um seine Drehachse 3 drehbar. Durch den Frischdampfeintritt 2 tritt Frischdampf 7 in die Dampfturbine ein, wobei zum Schubausgleich ein Ausgleichskolben 8 an dem Frischdampfeintritt 2 zur Lagerseite 6 hin vorgesehen ist. Der Ausgleichskolben 8 weist zum Dampfturbinenrotor 1 hin eine Labyrinthdichtung 9 auf, durch die ein Leckdampf 10 beim Betrieb der Dampfturbine strömt.

Das Wellenende 4 weist an der Frischdampfseite 5 eine erste Wellenstufe 11 und an der Lagerseite 6 eine zweite Wellenstufe 12 auf, die einen kleineren Durchmesser hat als die erste Wellenstufe 11. Der Ausgleichskolben 8 ist an der ersten Wellenstufe 11 angeordnet, so dass zwischen der ersten Wellenstufe 11 und dem Ausgleichskolben 8 die Labyrinthdichtung 9 angeordnet ist. An der zweiten Wellenstufe 12 ist ein Magnetlager 13 angebaut, mit dem der Dampfturbinenrotor 1 um die Drehachse 3 drehbar gelagert ist. Zwischen der ersten Wellenstufe 11 und der zweiten Wellenstufe 12 ist eine dritte Wellenstufe 14 angesiedelt, deren Durchmesser kleiner als der Durchmesser der ersten Wellenstufe 11 und größer als der Durchmesser der zweiten Wellenstufe 12 ist.

Auf der dritten Wellenstufe 14 ist eine Kühlscheibe 15 angeordnet, die zur Umgebung der Dampfturbine hin freigelegt ist. Die Kühlscheibe 15 ist mit einem Schrumpfsitz 16 auf der dritten Wellenstufe 14 befestigt, wobei in der in Fig. 1 gezeigten Querschnittshälfte die Kühlscheibe 15 in ihrer radialen Breite größer als in ihrer axialen Dicke ausgebildet ist. Mit dem Schrumpfsitz 16 ist die Kühlscheibe 15 wärmeleitend mit der dritten Wellenstufe 14 verbunden.

Beim Betrieb der Dampfturbine tritt der Frischdampf 7 an dem Frischdampfeintritt 2 in die Dampfturbine ein und erwärmt dadurch den Dampfturbinenrotor 1. Ferner tritt ein Anteil des Frischdampfs 7 als der Leckdampf 10 durch die Labyrinthdichtung 9 und erwärmt ebenfalls den Dampfturbinenrotor 1. Aufgrund von Wärmeleitung in dem Dampfturbinenrotor 1 wird durch diesen Wärmeeintrag das Wellenende 4 von einem ersten Wärmestrom 17 erwärmt. Ebenfalls erwärmt wird die Kühlscheibe 15, wobei von dem ersten Wärmestrom 17 sich ein zweiter Wärmestrom 18 abzweigt und in die Kühlscheibe 15 fließt. Dadurch, dass die Kühlscheibe 15 mit der Umgebungsluft der Dampfturbine in Kontakt steht, wird beim Betrieb der Dampfturbine, bei dem sich der Dampfturbinenrotor 1 dreht, aufgrund von Konvektion eine Abwärme 20 an die Umgebung abgegeben, die dem zweiten Wärmestrom 18 entspricht. Dadurch erreicht das Magnetlager 13 lediglich ein dritter Wärmestrom 19 via das Wellenende 4. Der dritte Wärmestrom 19 ist verglichen mit dem ersten Wärmestrom 17 von dem zweiten Wärmestrom 18 reduziert, so dass das Magnetlager 13 vor Überhitzung durch den ersten Wärmestrom 17 geschützt ist.

## Patentansprüche

1. Dampfturbine mit einem Frischdampfeintritt (2) und einem Dampfturbinenrotor (1), der an seinem frischdampfeintrittsseitigen Wellenende (4) mit einem Magnetlager (13) gelagert ist, wobei zwischen dem Frischdampfeintritt (2) und dem Magnetlager (13) das Wellenende (4) mit einer umlaufenden Kühlrippe (15) versehen ist, die von einem Kühlmedium umströmbar ist, so dass ein Wärmestrom (18), der von Frischdampf (7), wenn dieser am Frischdampfeintritt (7) in die Dampfturbine eintritt, in den Dampfturbinenrotor (1) eingebracht ist, von der Kühlrippe (15) an das Kühlmedium abführbar ist, **dadurch gekennzeichnet, dass** die Kühlrippe (15) zur Umgebung der Dampfturbine hin freigelegt ist und somit das Kühlmedium Luft ist.

2. Dampfturbine gemäß Anspruch 1, wobei die von dem Kühlmedium umströmten Bereiche der Oberfläche der Kühlrippe (15) mit einer die Oberfläche vergrößernd wirkenden Gestalt versehen sind.

3. Dampfturbine gemäß Anspruch 2, wobei die von dem Kühlmedium umströmten Bereiche der Oberfläche der Kühlrippe (15) wellig ausgestaltet sind.

4. Dampfturbine gemäß einem der Ansprüche 1 bis 3, wobei die Kühlrippe (15) als eine Scheibe ausgebildet ist.

5. Dampfturbine gemäß Anspruch 4, wobei die Scheibe (15) einstückig mit dem Wellenende (4) ausgebildet ist.

6. Dampfturbine gemäß Anspruch 5, wobei die Scheibe (15) mit einem Schrumpfsitz (16) an das Wellenende (4) angebaut ist.

7. Dampfturbine gemäß einem der Ansprüche 1 bis 6, wobei die Dampfturbine einen Ausgleichskolben (8) aufweist, mit dem der Frischdampfeintritt (2) von dem Magnetlager (13) räumlich abgetrennt ist, wobei zwischen dem Ausgleichskolben (8) und dem Magnetlager (13) die Kühlrippe (15) angeordnet ist.

8. Dampfturbine gemäß Anspruch 7, wobei das Wellenende (4) eine erste Wellenstufe (11) und eine dritte Wellenstufe (14) aufweist, die einen größeren Durchmesser hat als die erste Wellenstufe (11), wobei auf der ersten Wellenstufe (11) das Magnetlager (13) und auf der dritten Wellenstufe (14) die Kühlrippe (15) vorgesehen sind.

9. Dampfturbine gemäß einem der Ansprüche 1 bis 8, wobei das Magnetlager (13) von heteropolarem Typ ist.

## Claims

1. Steam turbine with a fresh steam inlet (2) and a steam turbine rotor (1) which is mounted, at its fresh steam inletside shaft end (4), by means of a magnetic bearing (13), wherein the shaft end (4) is provided, between the fresh steam inlet (2) and the magnetic bearing (13), with a circumferential cooling rib (15), around which a coolant can flow, such that a flow of heat (18) which is introduced into the steam turbine rotor (1) by fresh steam (7) when this fresh steam enters the steam turbine at the fresh steam inlet (2) can be carried off from the cooling rib (15) to the coolant, **characterized in that** the cooling rib (15) is open to the surroundings of the steam turbine and thus the coolant is air.

2. Steam turbine according to Claim 1, wherein those regions of the surface of the cooling rib (15) around which the coolant flows are provided with an aspect that has the effect of increasing the surface area.

3. Steam turbine according to Claim 2, wherein those regions of the surface of the cooling rib (15) around which the coolant flows are wave-shaped.

4. Steam turbine according to one of Claims 1 to 3, wherein the cooling rib (15) is formed as a disc.

5. Steam turbine according to Claim 4, wherein the disc (15) is formed in one piece with the shaft end (4).

6. Steam turbine according to Claim 5, wherein the disc (15) is shrink-fitted (16) onto the shaft end (4).

7. Steam turbine according to one of Claims 1 to 6, wherein the steam turbine has an equalizing piston (8) by means of which the fresh steam inlet (2) is spatially separated from the magnetic bearing (13), wherein the cooling rib (15) is arranged between the equalizing piston (8) and the magnetic bearing (13).

8. Steam turbine according to Claim 7, wherein the shaft end (4) has a first shaft step (11) and a third shaft step (14) whose diameter is greater than that of the first shaft step (11), wherein the magnetic bearing (13) is provided on the first shaft step (11) and the cooling rib (15) is provided on the third shaft step (14).

9. Steam turbine according to one of Claims 1 to 8, wherein the magnetic bearing (13) is of the heteropolar type.

## Revendications

1. Turbine à vapeur avec une entrée de vapeur fraîche (2) et d'un rotor de turbine à vapeur (1) monté à son extrémité d'arbre (4), côté entrée de vapeur fraîche, au moyen d'un palier magnétique (13), entre ladite entrée de vapeur fraîche (2) et ledit palier magnétique (13) l'extrémité d'arbre (4) étant dotée d'une ailette de refroidissement périphérique (15) autour de laquelle peut circuler un fluide de refroidissement, de sorte qu'un flux de chaleur (18), introduit dans le rotor de turbine à vapeur (1) par la vapeur fraîche (7) si celle-ci entre dans la turbine à vapeur à l'entrée de vapeur fraîche (7), peut être évacué par l'ailette de refroidissement (15) au fluide de refroidissement, **caractérisée en ce que** l'ailette de refroidissement (15) est exposée au milieu ambiant de la turbine à vapeur et, ainsi, le fluide de refroidissement est de l'air.

2. Turbine à vapeur selon la revendication 1, les parties de la surface de l'ailette de refroidissement (15) autour desquelles circule le fluide de refroidissement ayant une forme avec effet agrandissant de la surface.

3. Turbine à vapeur selon la revendication 2, les parties de la surface de l'ailette de refroidissement (15) autour desquelles circule le fluide de refroidissement étant ondulées.

4. Turbine à vapeur selon l'une des revendications 1 à 3, l'ailette de refroidissement (15) étant réalisée sous forme de disque.

5. Turbine à vapeur selon la revendication 4, le disque (15) étant formé d'une seule pièce avec l'extrémité d'arbre (4).

6. Turbine à vapeur selon la revendication 5, le disque (15) étant monté sur l'extrémité d'arbre (4) par un ajustement fretté (16).

7. Turbine à vapeur selon l'une des revendications 1 à 6, la turbine à vapeur présentant un piston d'équilibrage (8) par lequel l'entrée de vapeur fraîche (2) est séparée spatialement du palier magnétique (13), l'ailette de refroidissement (15) étant agencée entre le piston d'équilibrage (8) et le palier magnétique (13).

8. Turbine à vapeur selon la revendication 7, l'extrémité d'arbre (4) présentant un premier étage d'arbre (11) et un troisième étage d'arbre (14) dont le diamètre est supérieur à celui du premier étage d'arbre (11), sur le premier étage d'arbre (11) étant prévu le palier magnétique (13) et sur le troisième étage d'arbre (14) l'ailette de refroidissement (15).

9. Turbine à vapeur selon l'une des revendications 1 à 8, le palier magnétique (13) étant du type hétéropolaire.
